# EUROPÄISCHE PATENTSCHRIFT

(11) **EP 2 636 894 B1**
(45) Veröffentlichungstag und Bekanntmachung des Hinweises auf die Patenterteilung: **19.07.2017**
(21) Anmeldenummer: 12194731.1
(22) Anmeldetag: 29.11.2012
(51) Int. Cl.: F03D 17/00, F03D 80/00, F03D 7/02, F03D 7/04, F03D 9/00, H02J 3/38

(54) **Offshore- Windenergiesystem**
Offshore wind energy system
Système d'éolienne offshore

(30) Priorität: 06.03.2012 DE 102012004225
(43) Veröffentlichungstag der Anmeldung: 11.09.2013
(60) Teilanmeldung: 16176669.6
(73) Patentinhaber: RWE Innogy GmbH, 45127 Essen (DE)
(72) Erfinder: Koch, Friedrich, Dr., 47623 Kevelaer (DE); Schierenbeck, Olaf, 21220 Seevetal (DE); Schöppenthau, Kai, 21220 Seevetal (DE)
(74) Vertreter: Cohausz & Florack

(56) Entgegenhaltungen:
- EP-A1- 2 397 688
- EP-A2- 2 182 207
- EP-A2- 2 236 820
- WO-A1-2010/060903
- WO-A2-2008/061698
- WO-A2-2011/050807

## Beschreibung

Die Erfindung betrifft ein Windenergiesystem, insbesondere ein Offshore-Windenergiesystem, umfassend eine Mehrzahl von über ein Energiekabelnetz elektrisch miteinander verbundenen Windkraftanlagen, mindestens eine Überwachungseinrichtung zum Überwachen des Windenergiesystems und mindestens eine Steuereinrichtung zum Vorgeben von mindestens einem Stromerzeugungssollwert für mindestens eine Windkraftanlage. Darüber hinaus betrifft die Erfindung ein Verfahren zum Betreiben eines Windenergiesystems, insbesondere eines Offshore-Windenergiesystems.

Die Nachfrage nach Energie aus regenerativen Quellen steigt stetig. Eine der zur Verfügung stehenden Ressourcen ist hierbei die Windenergie. Eine Windkraftanlage bzw. Windenergieanlage wandelt die kinetische Energie des Windes mittels eines Rotors und eines Generators in elektrische Energie um.

Heutzutage werden Windenergiesysteme bzw. Windparks aus mehreren über ein Energiekabelnetz miteinander verbundenen Windkraftanlagen gebildet. Um den elektrischen Energieertrag zu maximieren, kann das Windenergiesystem insbesondere in Gebieten mit hoher Windwahrscheinlichkeit und -intensität aufgestellt werden. Besonders geeignet sind Standorte auf der offenen See, auch Offshore-Gebiete genannt.

Die durch die Windkraftanlagen erzeugte elektrische Energie, insbesondere ein elektrischer Strom, kann über das Energiekabelnetz des Windenergiesystems und über eine Substation in das öffentliche Netz eingespeist werden. Das Energiekabelnetz ist im Allgemeinen für den Regelbetrieb, also fehlerfreien Betrieb, ausgelegt. Insbesondere sind aufgrund der mit einem Energiekabel verbundenen hohen Kosten die Energiekabel nicht überdimensioniert gebildet. Beispielsweise weist ein Energiekabel eine Stromtragfähigkeit auf, die im Regelbetrieb des Windenergiesystems maximal auftreten kann.

Während des Betriebs eines Windenergiesystems können jedoch Netzfehler, wie ein defektes Energiekabel oder eine defekte Windkraftanlage, auftreten. In diesem Fall kann sich der Stromfluss innerhalb des Energiekabelnetzes ändern und insbesondere zu einer Überlastung einzelner Energiekabel führen. Die Überlastung kann zu weiteren Netzfehlern mit entsprechenden Kosten führen.

Bei Offshore-Windenergiesystemen kommt hinzu, dass im Gegensatz zu Landkabeln Seekabel besonderen Gefahren ausgesetzt sind und leichter beschädigt werden können. So ankern immer wieder Schiffe trotz eines Verbots im Gebiet eines Offshore-Windenergiesystems. Durch den Anker der Schiffe können die Seekabel beschädigt werden. Auch kann es passieren, dass ein Seekabel nicht ausreichend im Meeresboden verankert worden ist und im Laufe der Zeit freigespült wird.

Zum Schutz des Windenergiesystems vor weiteren Beschädigungen ist es aus dem Stand der Technik bekannt, sämtliche Windkraftanlagen des Windenergiesystems bei Auftreten eines Netzfehlers abzuschalten. Der Betrieb wird in der Regel erst nach einem Beheben des Netzfehlers wieder aufgenommen. Es versteht sich, dass eine Abschaltung der Windkraftanlagen stets von Nachteil ist und so kurz wie möglich sein sollte.

Ferner offenbart die WO 2011/050807 A2 ein Windenergiesystem mit einer Mehrzahl von Windkraftanlagen, die über elektrische Leistungskabel miteinander verbunden sind. Über eine Substation sind hierbei die Windkraftanlagen mit einem elektrischen Netz verbunden, wobei Spannung und Strom gemessen werden können, um einen Netzfehler zu detektieren. Darüber hinaus offenbart die WO 2010/060903 A1 ein Kraftwerksystem mit einer Vielzahl an Generatoren, wie Windturbinen, wobei zur Detektion eines Netzfehlers ein Sensor vorgesehen ist. Weiter ist aus der EP 2 236 820 A2, ein Verfahren zum Betreiben eines Kraftwerksystems, wie einen Windpark, bekannt. Schließlich geht weiterer Stand der Technik aus den Druckschriften EP 2 397 688 A1, WO 2008/061698 A2 und EP 2 182 207 A2 hervor.

Der Erfindung liegt daher die Aufgabe zugrunde, ein Windenergiesystem und ein Verfahren zum Betreiben eines Windenergiesystems zur Verfügung zu stellen, welches auch bei einem Netzfehler zumindest einen eingeschränkten Betrieb des Windenergiesystems in sicherer Weise erlaubt.

Die Aufgabe wird erfindungsgemäß bei einem Windenergiesystem, insbesondere einer Offshore-Windenergiesystem, gemäß Patentanspruch 1 gelöst. Das Windenergiesystem umfasst eine Mehrzahl von über ein Energiekabelnetz elektrisch miteinander verbundenen Windkraftanlagen. Das Windenergiesystem umfasst mindestens eine Überwachungseinrichtung zum Überwachen des Windenergiesystems. Das Windenergiesystem umfasst mindestens eine Steuereinrichtung zum Vorgeben von mindestens einem Stromerzeugungssollwert für mindestens eine Windkraftanlage. Die Überwachungseinrichtung ist zum Detektieren eines Netzfehlers eingerichtet. Bei Detektion eines Netzfehlers ist die Überwachungseinrichtung eingerichtet, die Position des Netzfehlers in dem Energiekabelnetz zu detektieren Bei Detektion eines Netzfehlers ist die Steuereinrichtung eingerichtet, derart, dass zumindest in Abhängigkeit von mindestens einem Energiekabelnetzparameter und in Abhängigkeit der Position des Netzfehlers der mindestens eine Stromerzeugungssollwert für mindestens eine Windkraftanlage reduziert wird, derart, dass eine Überlastung des Energiekabelnetzes verhindert wird.

Im Gegensatz zum Stand der Technik werden erfindungsgemäß bei Detektion eines Netzfehlers die Windkraftanlagen nicht deaktiviert, sondern mindestens ein Stromerzeugungssollwert wird derart gesetzt, dass trotz des Netzfehlers ein Betrieb des Windenergiesystems sichergestellt ist, ohne dass weitere Beschädigungen im Windenergiesystem zu erwarten sind.

Das Windenergiesystem kann insbesondere ein Offshore-Windenergiesystem sein. Mehrere Windkraftanlagen können durch ein Energiekabelnetz umfassend eine Mehrzahl von Energiekabeln miteinander verbunden sein. Eine Windkraftanlage kann die kinetische Energie des Winds mittels eines Rotors und eines Generators in elektrische Energie umwandeln. Die jeweils zu erzeugende Energiemenge von jeder Windkraftanlage kann durch einen Stromerzeugungssollwert vorgegeben sein. Im Regelbetrieb kann der Stromerzeugungssollwert derart gesetzt sein, dass die maximal mögliche Energiemenge erzeugt wird.

Das Windenergiesystem weist eine Steuereinrichtung auf, um den Stromerzeugungssollwert vorzugeben. Es kann beispielsweise sein, dass der Strombedarf im öffentlichen Netz gering ist. Dann kann die Steuereinrichtung den Stromerzeugungssollwert von mindestens einer Windkraftanlage reduzieren.

Die Energiekabel des Energiekabelnetzes können zur Übertragung der erzeugten elektrischen Energie vorgesehen sein. Zur Einspeisung des erzeugten Stroms in ein öffentliches Netz kann ferner eine mit den Windkraftanlagen über Energiekabel verbundene Substation beispielsweise in Form einer Schaltanlage vorgesehen sein. Die Schaltanlage kann insbesondere ein Umspannwerk umfassen. Bei einem Offshore-Windenergiesystem kann die erzeugte elektrische Energie von der Schaltanlage über geeignete Seekabel direkt oder über eine Hochspannungs-Gleichstromübertragungsplattform an ein Onshore-Umspannwerk übertragen und von dort ins öffentliche Netz eingespeist werden.

Ferner ist eine Überwachungseinrichtung zum Überwachen des Windenergiesystems vorgesehen. Insbesondere ist die Überwachungseinrichtung dazu eingerichtet, einen Netzfehler zu detektieren. Unter einem Netzfehler ist insbesondere ein Ereignis zu verstehen, welches die Energieübertragung, insbesondere den Stromfluss, im Windenergiesystem beeinträchtigt. Beispielhafte und nicht abschließende Netzfehler sind defekte Energiekabel und defekte Windkraftanlagen. Zur Überwachungen kann die Überwachungseinrichtung geeignete Sensoren umfassen.

Die mit einem Netzfehler einhergehende Gefahr der Überlastung des Energiekabelnetzes wird erfindungsgemäß dadurch reduziert, dass mindestens ein Stromerzeugungssollwert von mindestens einer Windkraftanlage angepasst wird. Unter einer Anpassung des Stromerzeugungssollwerts ist insbesondere eine Reduzierung des aktuellen Stromerzeugungssollwerts zu verstehen, um eine Überlastung des Energiekabelnetzes zu verhindern. Insbesondere wird die Windkraftanlage nicht deaktiviert. Der Stromerzeugungssollwert wird bei einer Anpassung jedenfalls nicht für alle Windkraftanlagen auf null gesetzt. Es versteht sich, dass (einzelne) Stromerzeugungssollwerte auch erhöht werden oder unverändert bleiben können.

Vorzugsweise kann der jeweilige Stromerzeugungssollwert von einer Mehrzahl von Windkraftanlagen insbesondere individuell angepasst werden. Die Anpassung des Stromerzeugungssollwerts wird in Abhängigkeit von mindestens einem Energiekabelnetzparameter durchgeführt.

Der Energiekabelnetzparameter kann ein Parameter sein, der Auskunft über die Belastungsfähigkeit der Energie übertragenden Komponenten des Windenergiesystems gibt. Beispielsweise kann die Topologie bzw. die Struktur des Energiekabelnetzes und/oder die Art der Energiekabel berücksichtigt werden. Indem zumindest ein Energiekabelnetzparameter bei der Anpassung eines Stromerzeugungssollwerts berücksichtigt wird, kann sichergestellt werden, dass keine Überlastung des Energiekabelnetzes oder anderer Komponenten des Windenergiesystems auftritt.

Gemäß einer ersten Ausführungsform des erfindungsgemäßen Windenergiesystems kann der Energiekabelnetzparameter ein vorgegebener Stromtragfähigkeitsgrenzwert von mindestens einem Energiekabel des Energiekabelnetzes sein. Der vorgegebene (maximale) Stromtragfähigkeitsgrenzwert kann insbesondere von den Eigenschaften des Kabels, wie dem verwendeten Material, dem Leiterdurchmesser, etc., aber auch von Umgebungsparametern, wie der Umgebungstemperatur, abhängen. Die Auswahl der Energiekabel erfolgt in Abhängigkeit der während des Regelbetriebs maximal auftretenden Stromstärken. Die Steuereinrichtung kann zum Anpassen des Stromerzeugungssollwerts in Abhängigkeit des Stromtragfähigkeitsgrenzwerts eingerichtet sein. Insbesondere kann mindestens ein Stromerzeugungssollwert, vorzugsweise sämtliche Stromerzeugungssollwerte von sämtlichen durch den Netzfehler betroffenen Windkraftanlagen derart gesetzt werden, dass der Stromtragfähigkeitsgrenzwert eines (jeden) Energiekabels nicht überschritten wird. Ein sicherer Betrieb ohne eine Gefahr einer Beschädigung des Energiekabelnetzes bei einem aufgetretenen Netzfehler kann bereitgestellt werden.

Es ist erkannt worden, dass abhängig von der Position des Netzfehlers, nur ein Teil des Windenergiesystems, beispielsweise nur bestimmte Windkraftanlagen und/oder Energiekabel von der Störung betroffen sind. Gemäß einer bevorzugten Ausführungsform kann bei Detektion eines Netzfehlers die Überwachungseinrichtung eingerichtet sein, die Position des Netzfehlers in dem Energiekabelnetz zu detektieren. Die Steuereinrichtung kann zum Anpassen des Stromerzeugungssollwerts in Abhängigkeit der Position des Netzfehlers eingerichtet sein. Beispielsweise kann aus der detektierten Position, wie ein bestimmtes Energiekabel oder eine bestimmte Windkraftanlage innerhalb des Windenergiesystems, geschlossen werden, welche Windkraftanlagen und/oder Energiekabel von der Störung betroffen sind. Nur die Stromerzeugungssollwerte von den betroffenen Windkraftanlagen können angepasst werden. Eine unnötige Reduzierung der erzeugten Energie kann verhindert werden.

Darüber hinaus kann gemäß einer weiteren Ausführungsform die Steuereinrichtung zum Anpassen des Stromerzeugungssollwerts in Abhängigkeit von mindestens einem Umgebungsparameter eingerichtet sein. Tritt ein Netzfehler auf, können Umgebungsparameter berücksichtigt werden. Der mindestens eine Umgebungsparameter kann ein aktueller meteorologischer Parameter und/oder ein vorhergesagter meteorologischer Parameter sein. Beispielsweise kann die aktuelle Windstärke und/oder die vorhergesagte Windstärke berücksichtigt werden. Andere beispielhafte Umgebungsparameter sind die Wellenhöhe und/oder die Wassertemperatur. Entsprechende Umgebungsparameter können von externen Messvorrichtungen der Steuereinrichtung zur Verfügung gestellt und/oder von in dem Windenergiesystem integrierten Messeinrichtungen erfasst werden. Die Umgebungsparameter können unmittelbare oder mittelbare Auswirkungen auf die maximale Belastung des Windenergiesystems haben. Durch eine Berücksichtigung von mindestens einem Umgebungsparameter kann die Anpassung noch weiter optimiert werden.

Grundsätzlich sollte der vorgegebene Stromtragfähigkeitsgrenzwert aus Sicherheitsgründen nicht überschritten werden. Es ist jedoch erkannt worden, dass eine kurzzeitige Überschreitung des Stromtragfähigkeitsgrenzwerts zu keiner Beeinträchtigung des Energiekabels führt. Beispielsweise kann ein zweiter Stromtragfähigkeitsgrenzwert, welcher abhängig von der Zeitdauer sein kann, die der erste vorgegebene Stromtragfähigkeitsgrenzwert überschritten wird, vorgegeben werden. Je geringer die Zeitdauer ist, um die der erste Stromtragfähigkeitsgrenzwert überschritten wird, desto höher kann der zweite Stromtragfähigkeitsgrenzwert sein. Es versteht sich, dass eine maximale Obergrenze vorgegeben werden kann.

Gemäß einer bevorzugten Ausführungsform des erfindungsgemäßen Windenenergiesystems wird vorgeschlagen, in Abhängigkeit von dem mindestens einen Umgebungsparameter den Stromerzeugungssollwert für eine vorgebbare Zeitdauer derart anzupassen, dass der vorgegebene Stromtragfähigkeitsgrenzwert für die vorgebbare Zeitdauer von einem erzeugten Strom überschritten wird. Vorzugsweise kann mindestens ein vorhergesagter Umgebungsparameter, wie ein vorhergesagter meteorologischer Parameter, berücksichtigt werden. Beispielhaft sei die vorgesagte Windstärke genannt. Wenn beispielsweise für einen begrenzten Zeitraum, wie zwei Stunden, eine hohe Windstärke und danach eine geringe Windstärke vorhergesagt ist, ist es möglich, den vorgegebenen Stromtragfähigkeitsgrenzwerts für den begrenzten Zeitraum zu überschreiten und erst danach wieder einzuhalten. Der mindestens eine Stromerzeugungssollwert kann entsprechend angepasst werden. Der elektrische Energieertrag kann maximiert werden.

Um eine besonders optimale Anpassung eines Stromerzeugungssollwerts durchführen zu können, kann ein Netzfehler zunächst in einem Modell des Windenergiesystems simuliert werden. Aus den Simulationsergebnissen können dann optimale Stromerzeugungssollwerte abgeleitet werden. Gemäß einer bevorzugten Ausführungsform kann die Steuereinrichtung eingerichtet sein, ein Modell von zumindest einem Teil des Windenergiesystems zu erzeugen. Vorzugsweise wird von dem gesamten Windenergiesystem ein Modell erzeugt. Bei der Erzeugung des Modells kann zumindest ein zuvor beschriebener Energiekabelnetzparameter berücksichtigt werden. Beispielsweise kann die Steuereinrichtung hierfür ein geeignetes Programm aufweisen. Die Steuereinrichtung kann dazu eingerichtet sein, zumindest die Auswirkungen eines Netzfehlers auf den Stromfluss durch das Energiekabelnetz mittels des Modells zu simulieren. Beispielsweise können Überlastungen einiger Teilbereiche des Energiekabelnetzes bei Auftreten eines bestimmten Netzfehlers erfasst werden. Die Steuereinrichtung kann dazu eingerichtet sein, in Abhängigkeit des Simulationsergebnisses den mindestens einen Stromerzeugungssollwert anzupassen. Insbesondere kann ein oder mehrere Stromerzeugungssollwert/e derart angepasst werden, dass keine Überlastung im Modell mehr auftritt.

Die zuvor beschriebene Simulation kann bei Auftreten eines Netzfehlers und/oder während des fehlerfreien Betriebs des Windenergiesystems durchgeführt werden. Um möglichst unmittelbar auf einen Netzfehler reagieren zu können, können eine Vielzahl an vorstellbaren Szenarien während des Regelbetriebs simuliert und anschließend in einer Speichereinrichtung, wie einer Datenbank, abgespeichert werden. Bei Auftreten eines Netzfehlers kann die Steuereinrichtung zum Durchsuchen der Speichereinrichtung und Auslesen der entsprechenden Daten, insbesondere der Stromerzeugungssollwerte, eingerichtet sein.

Neben dem mindestens einen Netzparameter können weitere Parameter, wie die zuvor beschriebenen Umgebungsparameter, bei der Simulation berücksichtigt werden.

Es versteht sich, dass gemäß anderen Varianten der Erfindung die Bestimmung der Stromerzeugungssollwerte auch ohne die Erzeugung eines Modells erfolgen kann. Beispielsweise kann die Bestimmung in Abhängigkeit von in der Vergangenheit aufgetretenen Störungen erfolgen.

Weiterhin kann vorzugsweise nach einer Anpassung des mindestens einen Stromerzeugungssollwerts die Überwachungseinrichtung das Windenergiesystem dahingehend überwachen, ob die simulierten Ergebnisse mit den tatsächlichen Ergebnissen übereinstimmen. Insbesondere kann überprüft werden, ob tatsächlich durch eine Anpassung eines oder mehrerer Stromerzeugungssollwerte eine Überlastung des Energiekabelnetzes verhindert wird. Wenn die tatsächlichen Ergebnisse nicht mit den simulierten Ergebnissen übereinstimmen, kann die Steuereinrichtung dazu eingerichtet sein, mindestens einen Stromerzeugungssollwert (erneut) anzupassen.

Auch kann die Überprüfung und Anpassung des mindestens einen Stromerzeugungssollwerts iterativ solange durchgeführt werden, bis ein sicherer Betrieb des Windenergiesystems gewährleistet werden kann. Dies ist insbesondere dann von Vorteil, wenn kein Modell erzeugt wird.

Wie bereits beschrieben wurde, kann mindestens eine über das Energiekabelnetz mit der Mehrzahl von Windkraftanlagen elektrisch verbundene Substation vorgesehen sein. Die Substation kann vorzugsweise eine Wechselstrom/Gleichstromwandlereinrichtung aufweisen. Alternativ kann die Schaltanlage mit einer Wechselstrom/Gleichstromwandlereinrichtung verbunden sein. Im Gegensatz zu Onshore-Windenergieanlagen ist es bei Offshore-Windenergiesystemen vorteilhaft, den durch die Windkraftanlagen erzeugten Wechselstrom zunächst in Gleichstrom zu wandeln. Eine Hochspannungs-GleichstromÜbertragung ermöglicht insbesondere eine verlustarme Energieübertragung.

Für eine zentrale Überwachung von einem oder mehreren Offshore-Windenergiesystem/en kann ferner eine entfernt angeordnete Zentrale vorgesehen sein. Die Zentrale kann sich insbesondere auf dem Festland befinden. Mindestens eine der Offshore-Windenergieeinrichtungen kann eine Kommunikationseinrichtung zur Kommunikation mit der Zentrale aufweisen. Beispielsweise kann jede Windkraftanlage eine Kommunikationseinrichtung zur Kommunikation mit der Substation aufweisen. Die Substation kann die empfangenen Informationen dann an die Zentrale direkt oder über eine weitere Zwischenstation weiterleiten. Insbesondere kann in einem Störungsfall eine entsprechende Nachricht an die Zentrale übermittelt werden. Bevorzugt kann die Nachricht Informationen über die Art der Störung bzw. des Fehlers und den Ort der Störung bzw. des Fehlers aufweisen. Von der Zentrale aus können geeignete Maßnahmen zur Fehlerbeseitigung veranlasst werden. Die Zentrale und/oder die Substation und/oder mindestens eine Windkraftanlage kann/können die Überwachungseinrichtung und/oder die Steuereinrichtung umfassen. Durch die Anordnung der Überwachungseinrichtung und der Steuereinrichtung in der Zentrale kann eine Fernüberwachung des Windenergiesystems ermöglicht werden.

Grundsätzlich kann die Struktur des Windenergiesystems beliebig sein. Beispielsweise können die Windkraftanlagen mit einer Mehrzahl von Energiekabeln in einer Ringstruktur angeordnet sein. Gemäß einer bevorzugten Ausführungsform kann eine Mehrzahl von Windkraftanlagen zu einem ersten Strang in Reihe geschaltet sein, wobei die an einem ersten Ende des erstens Strangs angeordnete Windkraftanlage mit einer Substation elektrisch verbunden sein kann. Ferner kann eine weitere Mehrzahl von Windkraftanlagen zu einem weiteren Strang in Reihe geschaltet sein, wobei die an einem ersten Ende des weiteren Strangs angeordnete Windkraftanlage mit der Substation elektrisch verbunden sein kann. Die an dem anderen Ende des ersten Strangs angeordnete Windkraftanlage kann mit der an dem anderen Ende des weiteren Strangs angeordneten Windkraftanlagen elektrisch verbindbar sein. Ein Strang, der auch String genannt wird, besteht aus zwei oder mehr elektrisch in Reihe geschalteten Windkraftanlagen. Bevorzugt kann zwischen zwei benachbarten Windkraftanlagen jeweils eine elektrische Verbindung beispielsweise in Form eines Energiekabels vorgesehen sein. Die Bildung von Strängen reduziert die Gesamtkabellänge und vereinfacht die Anbindung an eine Substation bzw. Schaltanlage. Besonders vorteilhaft ist, wenn die am Ende eines Strangs angeordnete Windkraftanlage im Bedarfsfall mit einer weiteren, bevorzugt einer am Enden eines anderen Strangs angeordneten Windkraftanlage elektrisch verbunden werden kann.

Bei Detektion eines Netzfehlers können vorzugsweise die Stromerzeugungssollwerte für zumindest alle Windkraftanlagen eines Stranges angepasst werden. Beispielsweise können die Stromerzeugungssollwerte der Windkraftanlagen eines Stranges angepasst werden, in dem der Netzfehler aufgetreten ist und/oder der durch den Netzfehler beeinträchtigt wird. Gemäß einer anderen Ausführungsform können auch die Stromerzeugungssollwerte sämtlicher Windkaftanlagen bei Detektion eines Netzfehlers angepasst werden. Dies erfolgt insbesondere dann, wenn der Netzfehler Auswirkungen auf das gesamte Windenergiesystem hat.

Wie zuvor beschrieben wurde, können die Windkraftanlagen eines Windenergiesystems in mehreren Strängen angeordnet sein. Um im Fehlerfall, beispielsweise bei einem defekten Energiekabel, nicht sämtliche Windkraftanlagen eines Strangs zu deaktivieren, kann gemäß einer bevorzugten Ausführungsform mindestens eine Schaltereinrichtung zum Schließen der elektrischen Verbindung zwischen der an dem anderen Ende des ersten Strangs angeordneten Windkraftanlage und der am anderen Ende des weiteren Strangs angeordneten Windkraftanlage bei Detektion eines Netzfehlers in dem ersten Strang oder dem weiteren Strang vorgesehen sein. Zwei Stränge können zusammen mit der Substation insbesondere einen geöffneten Ring bilden. Im Bedarfsfall, wie bei einem fehlerhaften Energiekabel, kann der Ring an der geöffneten Stelle geschlossen und an einer anderen Stelle zur Umgehung des fehlerhaften Energiekabels aufgetrennt werden.

Die Detektion eines Netzfehlers kann beliebig gestaltet sein. Beispielsweise kann die Überwachungseinrichtung eine Mehrzahl von Sensoren aufweisen oder mit diesen verbunden sein. Eine besonders sichere und zeitnahe Detektion eines Netzfehlers, insbesondere eines fehlerhaften Energiekabels, kann gemäß einer weiteren Ausführungsform dadurch erreicht werden, dass mindestens zwei über ein Energiekabel miteinander verbundene Windkraftanlagen ein Differenzmesssystem zum Detektieren eines Netzfehlers des Energiekabels aufweisen. Ein Differenzsystem kann dazu konfiguriert sein, bei einem Energiekabel die Differenz zwischen dem an einem Ende des Energiekabels eingespeisten und dem an dem anderen Ende des Energiekabels entnommenen Stroms zu erfassen. Beispielsweise liegt eine Beschädigung eines Energiekabels dann vor, wenn der in das Energiekabel eingespeiste Strom von dem am anderen Ende des Energiekabels empfangenen Strom abweicht. Es versteht sich, dass Grenzwerte vorgegeben werden können, um die im realen Betrieb auftretenden Stromverluste des Energiekabels zu berücksichtigen. Ferner versteht es sich, dass andere elektrische Größen, die an dem Energiekabel anliegen, alternativ oder zusätzlich zum Strom erfasst werden können. Beispielsweise kann die aktuelle Spannung erfasst werden.

Ein weiterer Aspekt der vorliegenden Erfindung ist ein Verfahren zum Betreiben eines Windenergiesystems, insbesondere eines Offshore-Windenergiesystems, wobei das Windenergiesystem eine Mehrzahl von über ein Energiekabelnetz elektrisch miteinander verbundenen Windkraftanlagen aufweist. Das Verfahren umfasst die Schritte:
- Detektieren eines Netzfehlers,
- wobei bei Detektion eines Netzfehlers die Position des Netzfehlers in dem Energiekabelnetz detektiert wird, und
- Reduzieren von mindestens einem vorgegeben Stromerzeugungssollwert für mindestens eine Windkraftanlage zumindest in Abhängigkeit von mindestens einem Energiekabelnetzparameter und der Position des Netzfehlers, derart, dass eine Überlastung des Energiekabelnetzes verhindert wird.

Das Verfahren kann insbesondere in einem zuvor beschriebenen Windenergiesystem eingesetzt werden.

Die Merkmale der Verfahren und Vorrichtungen sind frei miteinander koimbinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Es gibt nun eine Vielzahl von Möglichkeiten, das erfindungsgemäße Windenergiesystem sowie das erfindungsgemäße Verfahren zum Betreiben eines Windenergiesystems auszugestalten und weiterzuentwickeln. Hierzu sei einerseits verwiesen auf die den unabhängigen Patentansprüchen nachgeordneten Patentansprüche, andererseits auf die Beschreibung von Ausführungsbeispielen in Verbindung mit der Zeichnung. In der Zeichnung zeigt:
- Fig. 1: eine schematische Ansicht eines ersten Ausführungsbeispiels eines Windenergiesystems gemäß der vorliegenden Erfindung;
- Fig. 2: eine schematische Ansicht eines weiteren Ausführungsbeispiels eines Windenergiesystems gemäß der vorliegenden Erfindung; und
- Fig. 3: ein Flussdiagramm eines Ausführungsbeispiels eines Verfahrens gemäß der vorliegenden Erfindung.

Nachfolgend werden für gleiche Elemente gleiche Bezugszeichen verwendet.

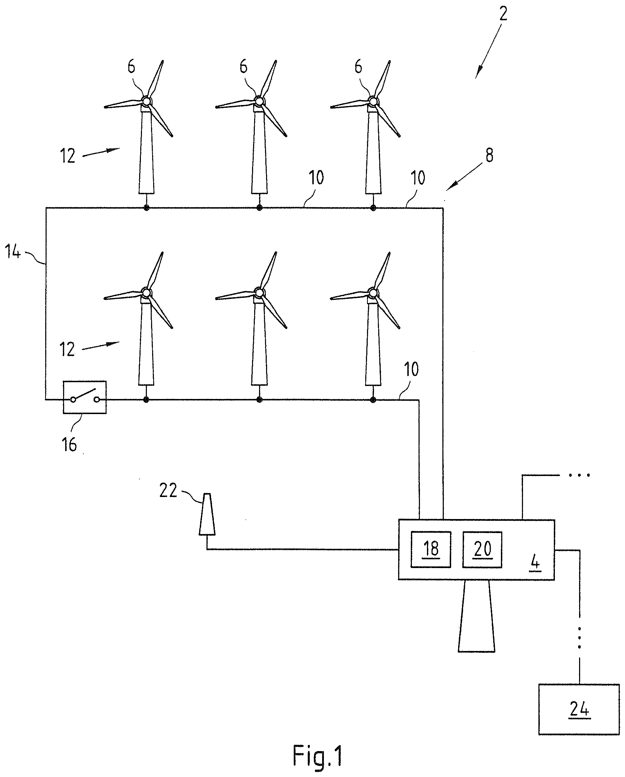

Figur 1 zeigt eine schematische Ansicht eines ersten Ausführungsbeispiels eines Windenergiesystems 2 gemäß der vorliegenden Erfindung. Das dargestellte Windenergiesystem 2 ist ein Offshore-Windenergiesystem 2. Das Offshore-Windenergiesystem 2 umfasst eine Substation 4 und eine Mehrzahl von Windkraftanlagen 6. Bei der Substation 4 kann es sich um eine Schaltanlage 4, wie eine Umspannplattform 4, handeln.

Die Windkraftanlagen 6 und die Substation 4 sind miteinander über ein Energiekabelnetz 8 umfassend eine Mehrzahl von Energiekabeln 10 elektrisch verbunden. Die Energiekabel 10 sind vorliegend als Seekabel 10 gebildet. Ein Energiekabel 10 ist insbesondere dazu eingerichtet, die von einer Windkraftanlage 6 erzeugte elektrische Energie zur nächsten Windkraftanlage 6 bzw. an die Substation 4 zu übertragen.

Im vorliegenden Ausführungsbeispiel ist eine Mehrzahl von Windkraftanlagen 6 in mehreren Strängen 12 bzw. Strings 12 in Reihe geschaltet. Beispielsweise können acht Stränge mit jeweils sechs Windkraftanlagen vorgesehen sein.

Vorliegend sind zu Gunsten einer besseren Übersicht lediglich zwei Stränge 12 mit jeweils drei Windkraftanlagen 6 abgebildet. Ein Ende eines Strangs 12 ist elektrisch über ein Energiekabel 10 mit der Substation 4 verbunden. Die beiden anderen Enden können über ein zusätzliches Energiekabel 14 miteinander verbunden werden. Insbesondere kann mindestens eine Schaltereinrichtung 16 zum Schließen der elektrischen Verbindung 14 vorgesehen sein. Ferner kann vorgesehen, dass ein Strang optional mit mehreren anderen Strängen verbunden werden kann. Es versteht sich, dass gemäß anderen Varianten der Erfindung die Windkraftanlagen auch in Ringstrukturen angeordnet sein können.

Darüber hinaus ist mindestens eine (zentrale) Netzüberwachungseinrichtung 18 vorgesehen. Die Netzüberwachungseinrichtung 18 ist derart eingerichtet, dass ein Netzfehler in dem Energiekabelnetz 8 detektiert werden kann. Ein beispielhafter und nicht abschließender Netzfehler ist ein defektes Energiekabel 10. Eine mögliche Ausgestaltung der Überwachung des Energiekabelnetzes 8 wird nachfolgend erläutert.

Ferner weist das Windenergiesystem 2 eine Steuereinrichtung 20 auf. Die Steuereinrichtung 20 ist dazu eingerichtet, mindestens einen Stromerzeugungssollwert für mindestens eine Windkraftanlage 6 vorzugeben. Vorzugweise kann eine (zentrale) Steuereinrichtung 20 vorgesehen sein, um zumindest für sämtliche mit der Substation 4 verbundene Windkraftanlagen 6 den jeweiligen Stromerzeugungssollwert vorzugeben. Der Stromerzeugungssollwert gibt insbesondere der jeweiligen Windkraftanlage 6 den zu erzeugenden Strom vor. Dieser kann in einem einfachen Fall der maximal mögliche Strom sein. Auch kann es sein, dass ein bestimmter Stromerzeugungssollwert aufgrund von äußeren Anforderungen, die von einem öffentlichen Netzbetreiber vorgegeben werden, gesetzt werden muss.

Im vorliegenden Ausführungsbeispiel sind die Netzüberwachungseinrichtung 18 und die Steuereinrichtung 20 in der Substation 4 angeordnet. Gemäß anderen Ausführungsformen können die Einrichtungen 18 und 20 auch an einem anderen Ort, beispielsweise einer entfernt angeordneten Zentrale 24 angeordnet sein. Die Zentrale 24 kann zur Überwachung und Steuerung von weiteren Windenergiesystemen vorgesehen sein.

Es versteht sich, dass die Netzüberwachungseinrichtung 18 und/oder die Steuereinrichtung 20 mit den Windkraftanlagen 6 über drahtlose und/oder drahtgebundene Kanäle für eine Kommunikation verbunden sein kann/können.

Darüber hinaus können Erfassungsmittel 22 zum Erfassen von aktuellen Umgebungsparametern, insbesondere von meteorologischen Parametern vorgesehen sein. Beispielsweise kann mindestens ein Windmessmast 22 zur Erfassung der Windrichtung und/oder der Windgeschwindigkeit vorgesehen sein.

Wird ein Netzfehler, wie ein defektes Energiekabel 10, von der Netzüberwachungseinrichtung 18 detektiert, so kann die Steuereinrichtung 20 über den Netzfehler informiert werden. Die Steuereinrichtung 20 ist dazu eingerichtet, bei Detektion eines Netzfehlers die Stromerzeugungssollwerte von einem oder mehreren Windkraftanlagen 6 anzupassen. Die Anpassung wird von der Steuereinrichtung 20 zumindest in Abhängigkeit von einem Energiekabelnetzparameter durchgeführt.

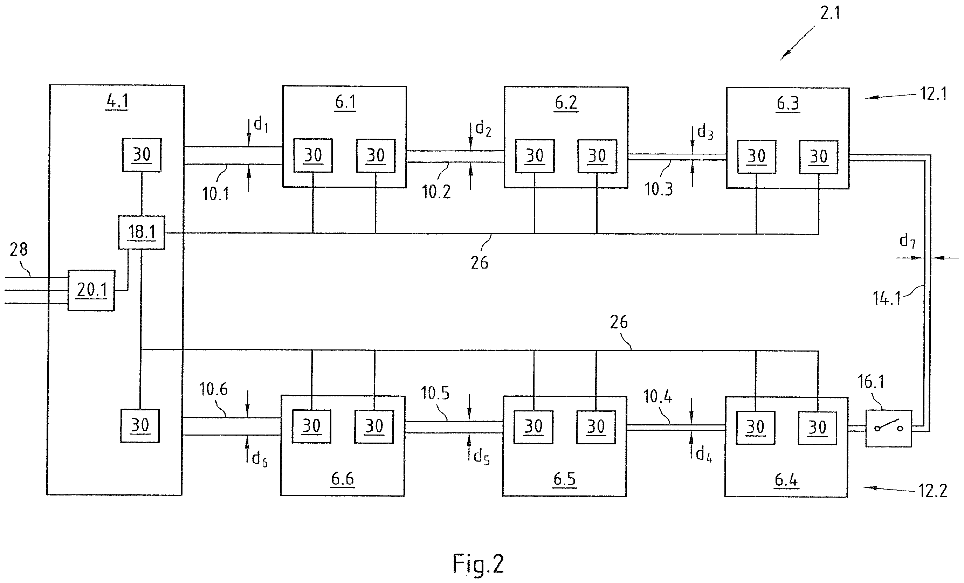

Figur 2 zeigt eine weitere schematische Ansicht eines weiteren Ausführungsbeispiels eines Windenergiesystems 2.1 gemäß der vorliegenden Erfindung. Das Windenergiesystem 2.1 umfasst zu Gunsten einer besseren Übersicht lediglich zwei Stränge 12.1 und 12.2 mit jeweils drei Windkraftanlagen 6.1 bis 6.6, welche mit einer Substation 4.1 verbunden sind.

Im vorliegenden Ausführungsbeispiel sind eine Mehrzahl von Energiekabeln 10.1 bis 10.6 zur Kopplung der Windkraftanlagen 6.1 bis 6.6 mit der Substation 4.1 vorgesehen. Eine Windkraftanlage 6.1 bis 6.6 kann einen Generator aufweisen, der die kinetische Energie des Winds in elektrische Energie wandelt. Diese Energie wird über die Energiekabel 10.1 bis 10.6 von den Windkraftanlagen 6.1 bis 6.6 an die Substation 4.1 übertragen. Im Regelbetrieb kann die elektrische Verbindung 14.1 getrennt, beispielsweise eine Schaltereinrichtung 16.1 geöffnet sein. Da die Windkraftanlagen 6.1 bis 6.3 bzw. 6.4 bis 6.6 in Reihe geschaltet sind, sind die Anforderung an die Energiekabel 10.1 bis 10.6 unterschiedlich. So ist der Strom, der über das Energiekabel 10.3 bzw. 10.4 im Regelbetrieb fließt, geringer als der Strom, der über das Energiekabel 10.2 bzw. 10.5 und 10.1 bzw. 10.6 fließt. Entsprechend unterschiedlich können die Energiekabel 10.1 bis 10.6 bemessen sein.

Die für ein Energiekabel 10.1 bis 10.6 zulässige Stromstärke hängt insbesondere von der Querschnittsfläche bzw. vom Durchmesser d des elektrischen Leiters ab. Derzeit eingesetzte Energiekabel 10.1 bis 10.6 weisen Querschnittsflächen im Bereich von 250 bis 800 mm² auf. Vorzugsweise kann es sich um Aluminiumleiter handeln. Aus Kostengründen werden die Energiekabel 10.1 bis 10.6 nicht überdimensioniert. Insbesondere erfolgt die Auslegung der Energiekabel 10.1 bis 10.6 hinsichtlich des Regelbetriebs. Daher nimmt der Durchmesser d₁ bis d₆ der Energiekabel 10.1 bis 10.6 im vorliegenden Ausführungsbeispiel zum Ende eines Stranges 12 (von der Substation 4.1 aus gesehen) hin stetig ab.

Zur Detektion eines Netzfehlers eines Energiekabels 10.1 bis 10.6 kann insbesondere ein Differenzmesssystem vorgesehen sein. Beispielsweise können zwei über ein Energiekabel 10.1 bis 10.6 verbundene Windkraftanlagen 6.1 bis 6.6 ein Differenzmesssystem umfassend jeweils zumindest eine Parametererfassungseinrichtung 30 aufweisen.

Beispielhaft wird nachfolgend die Detektion eines defekten Energiekabels 10.2 zwischen den Windkraftanlagen 6.1 und 6.2 ausgeführt.

Die jeweilige Parametererfassungseinrichtung 30 der Windkraftanlagen 6.1 und 6.2 ist dazu eingerichtet, den Wert von mindestens einem Parameter des elektrischen Signals, welches an dem Energiekabel 10.2 auf Seiten der ersten Windkraftanlage 6.1 bzw. der weiteren Windkraftanlage 6.2 anliegt, zu bestimmen.

Beispielsweise kann eine Messeinrichtung 30 zum Messen des mindestens einen Parameterwerts vorgesehen sein. Vorzugsweise kann der Strom und/oder die Spannung gemessen werden. Eine Bestimmung des Stroms und der Spannung kann vorteilhaft sein, um fehlerhafte Messungen eines Parameters zu erkennen.

Insbesondere kann der jeweilige Stromwert an beiden Enden des Energiekabels 10.2 erfasst werden. Die Differenz kann aus den beiden erfassten Stromwerten bestimmt werden. Auch kann eine Vergleichsoperation durchgeführt werden. Beispielsweise kann zwischen den Messeinrichtungen 30 ein Kommunikationskanal 26, wie ein drahtgebundener oder drahtloser Kanal 26, für einen Datenaustausch vorgesehen sein. Ferner kann mindestens eine der Messeinrichtungen 30 eine Verarbeitungseinrichtung oder dergleichen aufweisen. Bevorzugt können beide Parameterbestimmungseinrichtungen 30 zur Bestimmung der Differenz bzw. Summe eingerichtet sein.

Im störungsfreien (idealen) Betrieb des Offshore-Windenergiesystems 2.1 sind die Beträge der beiden bestimmten Stromwerte gleich. Ein defektes Energiekabel 10.2 liegt insbesondere dann vor, wenn die Differenz bzw. Summe der bestimmten Stromwerte ungleich null ist. Es versteht sich, dass Grenzwerte vorgegeben werden können, um die im realen Betrieb auftretenden Stromverluste eines Energiekabels 10.2 zu berücksichtigen. Dann kann eine bestimmte Differenz mit der vorgebbaren Differenz verglichen werden, um eine fehlerhafte elektrische Verbindung 10.2 zu detektieren.

Bei Detektion eines Netzfehlers kann das Energiekabel 10.2 von den Windkraftanlagen 6.1 und 6.2 elektrisch beispielsweise durch eine oder mehrere Schaltereinrichtung/en getrennt werden. Die Messeinrichtung 30 kann die (zentrale) Netzüberwachungseinrichtung 18.1 über den Fehler informieren. Die Position des Netzfehlers bzw. die defekte Komponente in dem Energiekabelnetz 8 kann bestimmt werden.

Es versteht sich, dass eine separate mit der Messeinrichtung 30 verbindbare Verarbeitungseinrichtung, beispielsweise die zentrale) Netzüberwachungseinrichtung 18.1, zur Bestimmung der Differenz der beiden erfassten Parameterwerte vorgesehen sein kann.

Um die funktionsfähigen Windkraftanlagen 6.2 und 6.3 weiter betreiben zu können, kann eine elektrische Verbindung zwischen der Windkraftanlagen 6.3 und 6.4 beispielsweise durch ein Schließen der Schaltereinrichtung 16.1 hergestellt werden.

Es ist erkannt worden, dass ohne eine Anpassung der Stromerzeugungssollwerte die Gefahr einer Überlastung und Beschädigung der weiteren Energiekabel 10.3, 14.1, 10.4, 10.5 und 10.6 besteht. Grund hierfür ist unter anderem die vorgegebene Stromtragfähigkeit der Energiekabel 10.3, 14.1, 10.4, 10.5 und 10.6. Ohne eine Anpassung der erzeugten Energie würde über die Energiekabel 14.1, 10.4, 10.5 und 10.6 im Vergleich zu einem Regelbetrieb ein deutlich höherer Strom fließen. In Abhängigkeit der maximal zulässigen Stromstärkewerte der entsprechenden Energiekabel 10.3, 14.1, 10.4, 10.5 und 10.6 können die Stromerzeugungssollwerte für die jeweiligen (betroffenen) Windkraftanlagen 6.2 bis 6.6 bevorzugt individuell angepasst werden.

Über die Kommunikationskanäle 28 können der Steuereinrichtung 20.1 weitere Daten, wie die Umgebungsparameter, zur Verfügung gestellt werden.

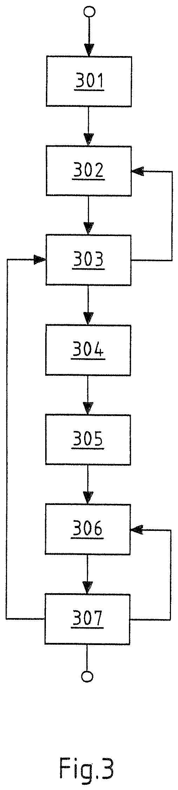

Eine detaillierte Beschreibung des Verfahrens zum Betreiben eines Windenergiesystems 2 bei Auftreten eines Netzfehlers erfolgt nachfolgend mit Hilfe der Figur 3. Die Figur 3 zeigt ein Flussdiagramm eines Ausführungsbeispiels eines Verfahrens zum Betreiben eines Windenergiesystems 2 gemäß der vorliegenden Erfindung.

In einem optionalen ersten Schritt 301 kann die Steuereinrichtung 20 eingerichtet sein, ein Modell des Windenergiesystems 2 zu erstellen. Insbesondere kann das reale Windenergiesystem 2 umfassend zumindest eine Mehrzahl von Windkraftanlagen 6, ein Energiekabelnetz 8 und eine Substation 4 virtuell abgebildet werden. Beispielsweise kann die Steuereinrichtung 20 Rechenmittel konfiguriert zum Ausführen geeigneter Programme umfassen. Es versteht sich, dass bei einer Modifizierung des Windenergiesystems 2, beispielsweise bei Hinzufügen, Entfernen und/oder Austauschen von einer oder mehrerer Komponenten des Windenergiesystems 2, das erstellte Modell entsprechend angepasst werden kann.

Ferner kann die Steuereinrichtung 20 eingerichtet sein, mittels des erstellten Modells die Auswirkungen eines Netzfehlers auf das Windenergiesystem 2 bzw. die einzelnen Komponenten des Windenergiesystems 2 zu simulieren (Schritt 302). Neben den vorgegeben Energiekabelnetzparametern, wie die Anzahl von Energiekabeln 10, deren jeweilige maximal zulässige Stromtragfähigkeit, die Länge der Energiekabel 10, die Leistungsfähigkeit der einzelnen Windkraftanlagen 6, etc., können zusätzliche Parameter, welche insbesondere die Energieerzeugung durch die Windkraftanlagen 6 beeinflussen, vorgegeben werden. Hierzu zählen beispielsweise Umgebungsparameter, wie meteorologische Parameter oder die Wellenhöhe. Es können aktuelle und/oder prognostizierte Parameter vorgeben werden. Die Auswirkungen eines Netzfehlers bei den vorgegeben Parameter können analysiert werden.

In einem nächsten Schritt 303 können unterschiedliche Reaktionen auf den Netzfehler, beispielsweise unterschiedliche Vorgaben für die Stromerzeugungssollwerte für verschiedene Windkraftanlagen simuliert werden. Die Stromerzeugungssollwerte mit guten Resultaten können abgespeichert werden. Unter einem guten Resultat ist insbesondere eine möglichst hohe Energieausbeute bei gleichzeitig ausreichend sicheren Betrieb des Windenergiesystems zu verstehen. Die entsprechenden Ergebnisse können in einer Speichereinrichtung gespeichert werden. Insbesondere kann gespeichert werden, welche Stromerzeugungssollwerte bei Auftritt eines bestimmten Netzfehlers bei bestimmten Randbedingungen eingestellt werden sollten.

Anschließend kann/können in Schritt 302 ein anderer Netzfehler und/oder andere Umgebungsparameter simuliert werden.

Die zuvor beschriebenen Schritte 301 bis 303 können vor dem Betrieb und/oder während des Betriebs des Windenergiesystems 2 durchgeführt werden. Alternativ oder zusätzlich zu einer Simulation können auch Erfahrungen aus tatsächlichen auftretenden Netzfehlern bei diesem und/oder anderen Windenergiesystemen berücksichtigt werden. Auch können lediglich tatsächlich vorliegende Energiekabelnetzparameter berücksichtigt werden. In einem einfachen Fall können lediglich die maximal zulässigen Stromtragfähigkeiten der verbauten Energiekabel 10 in einer Speichereinrichtung hiterlegt sein.

Das Windenergiesystem 2 kann in einem Schritt 304 durch eine Netzüberwachungseinrichtung 18 überwacht werden. Insbesondere können Netzfehler, wie defekte Energiekabel 10 und/oder defekte Windkraftanlagen 6, detektiert werden. Wie zuvor beschrieben wurde, kann die Netzüberwachungseinrichtung 18 hierbei zusätzlich mit weiteren Messeinrichtungen 30 zusammenwirken. Gerade ein Differenzmesssystem erlaubt eine besonders zeitnahe Detektion von Netzfehlern.

Bei Detektion eines Netzfehlers kann in einem Schritt 305 zumindest ein Energiekabelnetzparameter bestimmt, beispielsweise aus der Speichereinrichtung ausgelesen werden, und bei der Anpassung des mindestens einen Stromerzeugungssollwert für mindestens eine Windkraftanlage 6 in Schritt 306 berücksichtigt werden.

Vorzugsweise kann in Schritt 305 der Netzfehler analysiert werden. Neben der Art des Netzfehlers kann insbesondere die Position des Fehlers in dem Windenergiesystem 2 bestimmt werden. Hieraus können beispielsweise die von dem Netzfehler beeinträchtigten Komponenten des Windenergiesystems 2 abgeleitet werden. Darüber hinaus ist es vorteilhaft, die aktuellen und/oder prognostizierten Umgebungsparameter zu bestimmen. Insbesondere können die aktuelle Windgeschwindigkeit und die für die nächste Zeit vorausgesagte Windgeschwindigkeit berücksichtigt werden. Sind beispielsweise hohe Windgeschwindigkeiten für die nächsten zwei Stunden vorhergesagt und in den darauffolgenden Stunden niedrige Windgeschwindigkeiten, können in Schritt 306 die Stromerzeugungssollwerte für die nächsten zwei Stunden derart gesetzt werden, dass die zulässige maximale Stromtragfähigkeit für diese zwei Stunden überschritten wird. Insbesondere ist erkannt worden, dass eine kurzzeitige Überschreitung der von dem Hersteller vorgegebenen Stromtragfähigkeitsgrenzwerte der Energiekabel 10 dann zulässig ist, wenn anschließend eine (deutliche) Reduktion des fließenden Stroms beispielsweise aufgrund reduzierter Windgeschwindigkeiten erfolgt. Es versteht sich, dass ein zweiter Stromtragfähigkeitsgrenzwert vorgegeben werden kann, der nicht überschritten werden darf.

Wenn zuvor die Schritte 301 bis 303 durchgeführt worden sind, kann in Schritt 305 die Speichereinrichtung mit den simulierten Szenarien nach einem Szenarium durchsucht werden, welches mit dem tatsächlich aufgetretenen Netzfehler und ggf. den tatsächlichen Umgebungsparameter (nahezu) übereinstimmt. Die den abgespeicherten Szenarien zugeordneten Stromerzeugungssollwerte können von der Steuereinrichtung 20 ausgelesen und zum Ansteuern der entsprechenden Windkraftanlagen 6 genutzt werden.

Nach einer Anpassung der Stromerzeugungssollwerte in Schritt 306 kann das Windenergiesystem überwacht werden (Schritt 307). Insbesondere kann ein Vergleich zwischen den simulierten Szenarium und dem tatsächlichen Szenarium durchgeführt werden. Falls Unterschiede beispielsweise von der Netzüberwachungseinrichtung 18 festgestellt werden, können die Stromerzeugungssollwerte ggf. nachjustiert werden. Zudem können die Erfahrungen aus einem tatsächlichen Szenarium abgespeichert und bei zukünftig auftretenden Fällen berücksichtigt werden.

Falls ein Modell bei der Anpassung des mindestens einen Stromerzeugungssollwerte nicht eingesetzt wurde, können gemäß einer weiteren Variante der Erfindung die Schritte 306 und 307 iterativ solange durchgeführt werden, bis ein zufriedenstellender Zustand des Windenergiesystems 2, insbesondere ein sicherer Betrieb des Windenergiesystems 2, erreicht worden ist.

## Patentansprüche

1. Windenergiesystem (2, 2.1), insbesondere Offshore-Windenergiesystem (2, 2.1), umfassend:
- eine Mehrzahl von über ein Energiekabelnetz (8) elektrisch miteinander verbundenen Windkraftanlagen (6, 6.1, 6.2, 6.3, 6.4, 6.5, 6.6),
- mindestens eine Überwachungseinrichtung (18, 18.1) zum Überwachen des Windenergiesystems (2, 2.1), und
- mindestens eine Steuereinrichtung (20, 20.1) zum Vorgeben von mindestens einem Stromerzeugungssollwert für mindestens eine Windkraftanlage (6, 6.1, 6.2, 6.3, 6.4, 6.5, 6.6),
**dadurch gekennzeichnet, dass**
- die Überwachungseinrichtung (18, 18.1) zum Detektieren eines Netzfehlers eingerichtet ist,
- bei Detektion eines Netzfehlers die Überwachungseinrichtung (18, 18.1) eingerichtet ist, die Position des Netzfehlers in dem Energiekabelnetz (8) zu detektieren und
- bei Detektion eines Netzfehlers die Steuereinrichtung (20, 20.1) eingerichtet ist, derart, dass zumindest in Abhängigkeit von mindestens einem Energiekabelnetzparameter und in Abhängigkeit der Position des Netzfehlers der mindestens eine Stromerzeugungssollwert für mindestens eine Windkraftanlage (6, 6.1, 6.2, 6.3, 6.4, 6.5, 6.6) reduziert wird, derart, dass eine Überlastung des Energiekabelnetzes verhindert wird.

2. Windenergiesystem (2, 2.1) nach Anspruch 1, **dadurch gekennzeichnet, dass**
- der Energiekabelnetzparameter ein vorgegebener Stromtragfähigkeitsgrenzwert von mindestens einem Energiekabel (10, 10.1, 10.2, 10.3, 10.4, 10.5, 10.6) des Energiekabelnetzes (8) ist, und
- die Steuereinrichtung (20, 20.1) zum Anpassen des Stromerzeugungssollwerts in Abhängigkeit des Stromtragfähigkeitsgrenzwerts eingerichtet ist.

3. Windenergiesystem (2, 2.1) nach einem der vorherigen Ansprüche, **dadurch gekennzeichnet, dass**
- die Steuereinrichtung (20, 20.1) zum Anpassen des Stromerzeugungssollwerts in Abhängigkeit von mindestens einem Umgebungsparameter eingerichtet ist,
- wobei der Umgebungsparameter insbesondere ein aktueller meteorologischer Parameter und/oder ein vorhergesagter meteorologischer Parameter ist.

4. Windenergiesystem (2, 2.1) nach Anspruch 3, **dadurch gekennzeichnet, dass** die Steuereinrichtung (20, 20.1) eingerichtet ist, in Abhängigkeit von dem mindestens einem Umgebungsparameter den Stromerzeugungssollwert für eine vorgebbare Zeitdauer derart anzupassen, dass der vorgegebene Stromtragfähigkeitsgrenzwert für die vorgebbare Zeitdauer von einem erzeugten Strom überschritten wird.

5. Windenergiesystem (2, 2.1) nach einem der vorherigen Ansprüche, **dadurch gekennzeichnet, dass**
- die Steuereinrichtung (20, 20.1) eingerichtet ist, ein Modell von zumindest einem Teil des Windenergiesystems (2, 2.1) zu erzeugen,
- die Steuereinrichtung (20, 20.1) eingerichtet ist, zumindest die Auswirkungen eines Netzfehlers auf den Stromfluss durch das Energiekabelnetz (8) mittels des Modells zu simulieren, und
- die Steuereinrichtung (20, 20.1) eingerichtet ist, in Abhängigkeit des Simulationsergebnisses den Stromerzeugungssollwert anzupassen.

6. Windenergiesystem (2, 2.1) nach einem der vorherigen Ansprüche, **dadurch gekennzeichnet, dass**
- eine Mehrzahl von Windkraftanlagen (6, 6.1, 6.2, 6.3) zu einem ersten Strang (12, 12.1) in Reihe geschaltet ist, wobei die an einem ersten Ende des erstens Strangs (12, 12.1) angeordnete Windkraftanlage (6.1) mit einer Substation (4,4.1) verbunden ist,
- eine weitere Mehrzahl von Windkraftanlagen (6, 6.4, 6.5, 6.6) zu einem weiteren Strang (12, 12.2) in Reihe geschaltet ist, wobei die an einem ersten Ende des weiteren Strangs (12, 12.2) angeordnete Windkraftanlage (6.6) mit der Substation (4, 4.1) verbunden ist, und
- die an dem anderen Ende des ersten Strangs (12, 12.1) angeordnete Windkraftanlage (6.3) mit der an dem anderen Ende des weiteren Strangs (12, 12.2) angeordneten Windkraftanlage (6.4) elektrisch verbindbar ist.

7. Windenergiesystem (2, 2.1) nach einem der vorherigen Ansprüche, **dadurch gekennzeichnet, dass** mindestens eine Schaltereinrichtung (16, 16.1) zum Schließen der elektrischen Verbindung (14) zwischen der an dem anderen Ende des ersten Strangs (12, 12.1) angeordneten Windkraftanlage (6.3) und der am anderen Ende des weiteren Strangs (12, 12.2) angeordneten Windkraftanlage (6.4) bei Detektion eines Netzfehlers in dem ersten Strang (12, 12.1) oder dem weiteren Strang (12,12.2) vorgesehen ist.

8. Windenergiesystem (2, 2.1) nach einem der vorherigen Ansprüche, **dadurch gekennzeichnet, dass** mindestens zwei über ein Energiekabel (10, 10.1, 10.2, 10.3, 10.4, 10.5, 10.6) miteinander verbundene Windkraftanlagen (6, 6.1, 6.2, 6.3, 6.4, 6.5, 6.6) ein Differenzmesssystem zum Detektieren eines Netzfehlers des Energiekabels (10, 10.1, 10.2, 10.3, 10.4, 10.5, 10.6) aufweisen.

9. Verfahren zum Betreiben eines Windenergiesystems (2, 2.1), insbesondere eines Offshore-Windenergiesystems (2, 2.1), wobei das Windenergiesystem (2, 2.1) eine Mehrzahl von über ein Energiekabelnetz (8) elektrisch miteinander verbundenen Windkraftanlagen (6, 6.1, 6.2, 6.3, 6.4, 6.5, 6.6)aufweist, umfassend:
- Detektieren eines Netzfehlers,
- wobei bei Detektion eines Netzfehlers die Position des Netzfehlers in dem Energiekabelnetz (8) detektiert wird, und
- Reduzieren von mindestens einem vorgegeben Stromerzeugungssollwert für mindestens eine Windkraftanlage (6, 6.1, 6.2, 6.3, 6.4, 6.5, 6.6) zumindest in Abhängigkeit von mindestens einem Energiekabelnetzparameter und der Position des Netzfehlers, derart, dass eine Überlastung des Energiekabelnetzes verhindert wird.

## Claims

1. Wind energy system (2, 2.1), in particular offshore wind energy system (2, 2.1), comprising:
- a plurality of wind turbines (6, 6.1,6.2, 6.3, 6.4, 6.5, 6.6) electrically connected to one another via a power cable network (8),
- at least one monitoring device (18, 18.1) for monitoring the wind energy system (2, 2.1), and
- at least one control device (20, 20.1) for setting at least one power generation setpoint for at least one wind turbine (6, 6.1, 6.2, 6.3, 6.4, 6.5, 6.6),
**characterized in that**
- the monitoring device (18,18.1) is configured to detect a network fault,
- the monitoring device (18, 18.1) is configured to detect the position of the network fault in the power cable network (8) in the event that a network fault is detected and
- the control device (20, 20.1) is configured in such a way that, in the event that a network fault is detected, at least as a function of at least one power cable network parameter and as a function of the position of the network fault, the at least one power generation setpoint is reduced for at least one wind turbine (6, 6.1, 6.2, 6.3, 6.4, 6.5, 6.6), to such an extent that an overload of the power cable network is prevented.

2. Wind energy system (2, 2.1) according to Claim 1,
**characterized in that**
- the power cable network parameter is a set current-carrying capacity limit of at least one power cable (10, 10.1, 10.2, 10.3, 10.4, 10.5, 10.6) in the power cable network (8), and
- the control device (20, 20.1) is configured to adjust the power generation setpoint as a function of the current-carrying capacity limit.

3. Wind energy system (2, 2.1) according to any of the previous claims,
**characterized in that**
- the control device (20, 20.1) is configured to adjust the power generation setpoint as a function of at least one ambient parameter,
- wherein the ambient parameter is in particular a current meteorological parameter and/or a predicted meteorological parameter.

4. Wind energy system (2, 2.1) according to Claim 3,
**characterized in that**
the control device (20, 20.1) is configured to adjust the power generation setpoint as a function of the at least one ambient parameter for a specifiable period of time, in such a way that the set current carrying-capacity limit is exceeded by a generated current for the specifiable period of time.

5. Wind energy system (2, 2.1) according to any of the previous claims,
**characterized in that**
- the control device (20, 20.1) is configured to generate a model of at least one portion of the wind energy system (2, 2.1),
- the control device (20, 20.1) is configured to simulate at least the effects of a network fault on the current flow through the power cable network (8) by means of the model, and
- the control device (20, 20.1) is configured to adjust the power generation setpoint depending on the simulation results.

6. Wind energy system (2, 2.1) according to any of the previous claims,
**characterized in that**
- a plurality of wind turbines (6, 6.1, 6.2, 6.3) are connected in series to form a first string (12, 12.1), wherein the wind turbine (6.1) arranged at a first end of the first string (12, 12.1) is connected to a substation (4,4.1),
- a further plurality of wind turbines (6, 6.4, 6.5, 6.6) are connected in series to form a further string (12, 12.2), wherein the wind turbine (6.6) arranged at a first end of the further string (12.12.2) is connected to the substation (4, 4.1),
- the wind turbine (6.3) arranged at the other end of the first string (12, 12.1) can be electrically connected to the wind turbine (6.4) arranged at the other end of the further string (12, 12.2).

7. Wind energy system (2, 2.1) according to any of the previous claims,
**characterized in that**
at least one switch device (16, 16.1) is provided for closing the electrical connection (14) between the wind turbine (6.3) arranged at the other end of the first string (12,12.1) and the wind turbine (6.4) arranged at the other end of the further string (12, 12.2) in the event that a network fault is detected in either the first string (12, 12.1) or the further string (12, 12.2).

8. Wind energy system (2, 2.1) according to any of the previous claims,
**characterized in that**
at least two wind turbines (6, 6.1, 6.2, 6.3, 6.4, 6.5, 6.6) that are connected to one another via a power cable (10, 10.1, 10.2, 10.3, 10.4, 10.5, 10.6) comprise a differential measuring system for detecting a network fault in the power cable (10, 10.1, 10.2, 10.3, 10.4, 10.5, 10.6).

9. Method for operating a wind energy system (2, 2.1), in particular an offshore wind energy system (2, 2.1), said wind energy system (2, 2.1) having a plurality of wind turbines (6, 6.1, 6.2, 6.3, 6.4, 6.5, 6.6) electrically connected to one another via a power cable network (8), comprising:
- detecting of a network fault,
- wherein on detection of a network fault the position of the network fault in the power cable network (8) is detected, and
- reducing of at least one set power generation setpoint for at least one wind turbine (6, 6.1, 6.2, 6.3, 6.4, 6.5, 6.6), at least as a function of at least one power cable network parameter and the position of the network fault, to such an extent that an overload of the energy cable network is prevented.

## Revendications

1. Système d'énergie éolienne (2, 2.1), en particulier système d'énergie éolienne offshore (2, 2.1), comprenant :
- une pluralité d'éoliennes (6, 6.1, 6.2, 6.3, 6.4, 6.5, 6.6) reliées les unes aux autres électriquement par un réseau de câbles de puissance (8),
- au moins un dispositif de surveillance (18, 18.1) servant à surveiller le système d'énergie éolienne (2, 2.1), et
- au moins un dispositif de commande (20, 20.1) servant à prédéfinir au moins une valeur théorique de production de courant pour au moins une éolienne (6, 6.1, 6.2, 6.3, 6.4, 6.5, 6.6),
**caractérisé**
- **en ce que** le dispositif de surveillance (18, 18.1) est installé pour détecter une erreur de réseau,
- **en ce que**, en cas de détection d'une erreur de réseau, le dispositif de surveillance (18, 18.1) est installé pour détecter la position de l'erreur de réseau dans le réseau de câbles de puissance (8), et
- **en ce que**, en cas de détection d'une erreur de réseau, le dispositif de commande (20, 20.1) est installé de manière telle, qu'au moins en fonction au moins d'un paramètre du réseau de câbles de puissance et qu'en fonction de la position de l'erreur de réseau, la valeur théorique de production de courant au moins au nombre de un, pour au moins une éolienne (6, 6.1, 6.2, 6.3, 6.4, 6.5, 6.6), soit réduite, de manière telle qu'une surcharge du réseau de câbles de puissance soit empêchée.

2. Système d'énergie éolienne (2, 2.1) selon la revendication 1, **caractérisé**
- **en ce que** le paramètre du réseau de câbles de puissance est une valeur limite de la capacité de charge du courant au moins d'un câble de puissance (10, 10.1, 10.2, 10.3, 10.4, 10.5, 10.6) du réseau de câbles de puissance (8), et
- **en ce que** le dispositif de commande (20, 20.1) est installé pour adapter la valeur théorique de production de courant, en fonction de la valeur limite de la capacité de charge du courant.

3. Système d'énergie éolienne (2, 2.1) selon l'une des revendications précédentes, **caractérisé**
- **en ce que** le dispositif de commande (20, 20.1) est installé pour adapter la valeur théorique de production de courant, en fonction au moins d'un paramètre d'environnement,
- où le paramètre d'environnement est en particulier un paramètre météorologique en cours et/ou un paramètre météorologique prévu.

4. Système d'énergie éolienne (2, 2.1) selon la revendication 3, **caractérisé en ce que** le dispositif de commande (20, 20.1) est installé pour adapter, en fonction du paramètre d'environnement au moins au nombre de un, la valeur théorique de production de courant prévue pour un laps de temps prédéfinissable, de manière telle que la valeur limite de la capacité de charge du courant, qui est prédéfinie pour un laps de temps prédéfinissable, soit dépassée par un courant produit.

5. Système d'énergie éolienne (2, 2.1) selon l'une quelconque des revendications précédentes, **caractérisé**
- **en ce que** le dispositif de commande (20, 20.1) est installé pour produire un modèle au moins d'une partie du système d'énergie éolienne (2, 2.1),
- **en ce que** le dispositif de commande (20, 20.1) est installé pour simuler, au moyen du modèle, au moins les répercussions d'une erreur de réseau sur le flux de courant traversant le réseau de câbles de puissance (8), et
- **en ce que** le dispositif de commande (20, 20.1) est installé pour adapter la valeur théorique de production de courant, en fonction du résultat de la simulation.

6. Système d'énergie éolienne (2, 2.1) selon l'une quelconque des revendications précédentes, **caractérisé**
- **en ce qu'**une pluralité d'éoliennes (6, 6.1, 6.2, 6.3) est montée en série pour former une première rangée (12, 12.1), où l'éolienne (6.1) disposée au niveau d'une première extrémité de la première rangée (12, 12.1) est reliée à une sous-station (4, 4.1),
- **en ce qu'**une autre pluralité d'éoliennes (6, 6.4, 6.5, 6.6) est montée en série pour former une autre rangée (12, 12.2), où l'éolienne (6.6) disposée au niveau d'une première extrémité de l'autre rangée (12, 12.2) est reliée à la sous-station (4, 4.1), et
- **en ce que** l'éolienne (6.3) disposée au niveau de l'autre extrémité de la première rangée (12, 12.1) peut être reliée électriquement à l'éolienne (6.4) disposée au niveau de l'autre extrémité de l'autre rangée (12, 12.2).

7. Système d'énergie éolienne (2, 2.1) selon l'une quelconque des revendications précédentes, **caractérisé en ce qu'**il est prévu, en cas de détection d'une erreur de réseau se produisant dans la première rangée (12, 12.1) ou dans l'autre rangée (12, 12.2), au moins un dispositif de commutation (16, 16.1) servant à la fermeture de la liaison électrique (14) établie entre l'éolienne (6.3) disposée au niveau de l'autre extrémité de la première rangée (12, 12.1), et l'éolienne (6.4) disposée au niveau de l'autre extrémité de l'autre rangée (12, 12.2).

8. Système d'énergie éolienne (2, 2.1) selon l'une quelconque des revendications précédentes, **caractérisé en ce qu'**au moins deux éoliennes (6, 6.1, 6.2, 6.3, 6.4, 6.5, 6.6) reliées les unes aux autres par un câble de puissance (10, 10.1, 10.2, 10.3, 10.4, 10.5, 10.6) présentent un système de mesure différentielle servant à la détection d'une erreur de réseau du câble de puissance (10, 10.1, 10.2, 10.3, 10.4, 10.5, 10.6).

9. Procédé pour faire fonctionner un système d'énergie éolienne (2, 2.1), en particulier un système d'énergie éolienne offshore (2, 2.1), où le système d'énergie éolienne (2, 2.1) présente une pluralité d'éoliennes (6, 6.1, 6.2, 6.3, 6.4, 6.5, 6.6) reliées les unes aux autres électriquement par un réseau de câbles de puissance (8), ledit procédé consistant :
- à détecter une erreur de réseau,
- où, en cas de détection d'une erreur de réseau, la position de l'erreur de réseau est détectée dans le réseau de câbles de puissance (8), et
- à réduire au moins une valeur théorique de la production de courant, qui est prédéfinie pour au moins une éolienne (6, 6.1, 6.2, 6.3, 6.4, 6.5, 6.6), au moins en fonction au moins d'un paramètre du réseau de câbles de puissance et en fonction de la position de l'erreur de réseau, de manière telle qu'une surcharge du réseau de câbles de puissance soit empêchée.
